# FASCICULE DE BREVET EUROPEEN

(11) **EP 0 533 591 B1**
(45) Date de publication et mention de la délivrance du brevet: **06.12.1995**
(21) Numéro de dépôt: 92420226.0
(22) Date de dépôt: 02.07.1992
(51) Int. Cl.: H02B 1/40, H05K 5/02

(54) **Châssis d'appareillage, notamment pour coffret électrique**
Gerätechassis, insbesondere für elektrischen Behälter
Chassis of a device, especially for electrical casing

(30) Priorité: 22.07.1991 FR 9109325
(43) Date de publication de la demande: 24.03.1993
(73) Titulaire: SCHNEIDER ELECTRIC SA, 92100 Boulogne Billancourt (FR)
(72) Inventeur: Pellicano, Joseph, Merlin Gerin, F-38050 Grenoble Cedex 09 (FR); Martinotti, Patrice, Merlin Gerin, F-38050 Grenoble Cedex 09 (FR)
(74) Mandataire: Hecké, Gérard

(56) Documents cités:
- EP-A- 0 010 820
- EP-A- 0 143 718
- EP-A- 0 351 279
- DE-A- 3 113 003
- DE-U- 7 837 673

## Description

La présente invention concerne de façon générale un châssis d'appareillage électrique.

Pour installer un grand nombre d'appareillages électriques, on utilise en général un chassis que l'on fixe sur un mur et on fixe au moins un appareillage électrique sur le châssis. Il est connu de constituer un tel châssis de façon à ce que l'appareillage électrique puisse être fixé sur le châssis en laissant un certain espace entre la face arrière de l'appareillage électrique et la surface de fixation. Cet espace entre l'appareillage et la surface de fixation permet le passage de câbles électriques et permet également un branchement plus facile de certains câbles électriques sur l'appareillage électrique. En général, les câbles sont rassemblés dans une première goulotte qui est installée sur la surface de fixation de façon à aboutir à proximité du châssis au niveau d'un de ses côtés, et une seconde goulotte qui aboutit au voisinage du châssis au niveau de son côté opposé. Les câbles électriques qui sortent de chaque goulotte passent au voisinage de la structure qui constitue le châssis et sont branchés sur des bornes correspondantes de l'appareillage électrique qui est fixé sur le châssis.

Un exemple d'un tel chassis selon l'art antérieur est décrit dans le document EP-A-0351279.

Un tel châssis est en général constitué par deux montants parallèles et par au moins un rail de fixation de l'appareillage électrique, ce rail venant se fixer transversalement à cheval sur les deux montants. Les montants sont en général de forme allongée sensiblement rectiligne. Les deux montants sont appliqués sur la surface de fixation, et le rail est appliqué sur la face extérieure de chaque montant. Ainsi, l'épaisseur des montants détermine l'espace qui sépare le rail de la surface de fixation. Chaque montant comporte en outre au niveau de chacune de ses deux extrémités opposées, une partie dont l'épaisseur est supérieure à celle de la partie centrale du montant. Les quatre parties d'extrémité des deux montants définissent les quatres coins d'un périmètre sensiblement rectangulaire qui correspond au périmètre extérieur du châssis. Il résulte de cela que les câbles qui parviennent au châssis au travers d'une goulotte doivent être disposés de façon a être regroupés dans le châssis dans l'espace qui est situé entre les deux montants. Il est évident que cet espace situé entre les deux montants présente une largeur (c'est à dire une distance le long d'une ligne perpendiculaire aux montants et parallèle au plan de fixation) inférieure à la largeur hors tout du châssis (c'est à dire la distance qui sépare deux bords latéraux externes du châssis). En d'autres termes, on peut dire qu'il n'est pas possible d'introduire un câble dans le châssis si ce câble parvient au châssis en un endroit occupé par un montant. Cependant, il a été jugé préférable de disposer les montants parallèles entre eux de façon à ce qu'ils soient écartés l'un de l'autre d'une distance inférieure à la longueur totale du rail, cela afin de supporter le rail en des points du rail qui ne sont pas situés à ses extrémités.

En d'autres termes, jusqu'à présent, il a été jugé préférable que le rail soit fixé sur les montants en des points de fixation situés en retrait par rapport aux extrémités du rail. Dans ces conditions, l'espace séparant les deux montants présente une dimension nettement inférieure à la longueur du rail, et par conséquent nettement inférieure à la largeur de l'appareillage électrique qui vient se fixer sur le rail. Cela conduit, comme cela a été dit précédemment, à la nécessité de regrouper ou resserrer les câbles qui parviennent dans l'espace séparant les deux montants, ce qui rend plus difficiles les opérations de connexion des extrémités des câbles sur les bornes de connexion correspondantes de l'appareillage électrique.

Un objet de la présente invention consiste à fournir un châssis d'appareillages électriques qui facilite les opérations de connection des câbles sur les bornes de l'appareillage électrique.

Un autre objet de la présente invention consiste à fournir un tel châssis qui présente de bonne qualité mécanique tout en étant d'un emploi plus commode et d'un coût de production plus faible.

L'invention concerne donc un châssis d'appareillage électrique destiné à être fixé sur une surface de fixation plane comprenant : deux montants parallèles dont les quatre extrémités les quatre coins d'un périmètre sensiblement rectangulaire du châssis, et au moins un rail de fixation de l'appareillage électrique qui vient se fixer transversalement sur les deux montants.

Selon une caractéristique de l'invention, chaque montant comprend : une partie centrale allongée rectiligne destinée à venir s'appliquer contre ladite surface de fixation et dont chaque extrémité est située à l'intérieur dudit périmètre du châssis, et une partie inclinée allongée qui est disposée au niveau de chacune des deux extrémités de ladite partie centrale, qui s'étend depuis l'extrémité correspondante de ladite partie centrale jusqu'au coin correspondant dudit périmètre du châssis, et dont l'extrémité libre est espacée d'une distance déterminée par rapport à ladite surface de fixation.

Ces objets et avantages, ainsi que d'autres de la présente invention seront mieux expliqués dans la description détaillée qui va suivre d'un exemple de réalisation de l'invention, en relation avec les dessins annexés parmi lesquels :
la figure 1 est une vue de dessus d'un premier mode de réalisation d'un châssis selon la présente invention ;
la figure 2 est une vue de côté du châssis de la figure 1, cette vue étant prise de façon à montrer les montants du châssis en bout ;
la figure 3 est une vue de côté du châssis de la figure 1, cette vue étant prise de façon à montrer les montants du châssis latéralement ;
la figure 4 est une vue de dessus d'un deuxième mode de réalisation d'un châssis selon la présente invention ;
la figure 5 est une vue de côté du châssis de la figure 4, cette vue étant prise de façon à montrer les montants du châssis en bout ; et
la figure 6 est une vue de côté du châssis de la figure 4, cette vue étant prise de façon à montrer les montants du châssis latéralement.

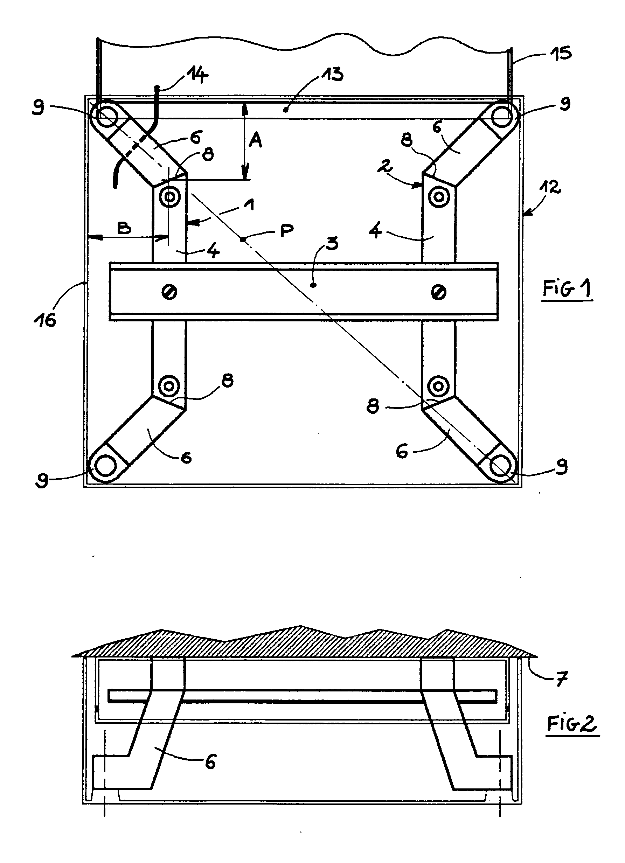

Sur la figure 1, on distingue un châssis selon la présente invention qui comprend essentiellement deux montants 1, 2 et un rail 3. Les montants 1, 2 ont des formes symétriques par rapport à un plan. Chaque montant 1 ou 2 est constitué par une partie centrale 4 et par deux parties inclinées 6 situées aux deux extrémités opposées de la partie centrale 4. Les parties centrales 4 des deux montants 1, 2 sont disposées de façon parallèle entre elles. Chaque partie centrale 4 a une forme allongée et sensiblement rectiligne et est destinée à venir s'appliquer contre une surface de fixation 7 (visible sur les figures 2 ou 3), cette surface de fixation étant constituée en général par un mur ou toute autre paroi solide sensiblement plane sur laquelle on souhaite fixer une installation électrique.

La partie centrale 4 des montants 1 ou 2 présente une épaisseur E qui détermine l'écartement entre le rail 3 et la surface de fixation 7.

Les deux montants 1 et 2 sont sensiblement parallèles, et les quatre extrémités 9 de ces deux montants définissent les quatre coins d'un périmètre sensiblement rectangulaire du châssis. Chaque partie inclinée 6 est allongée et est disposée au niveau d'une extrémité 8 d'une partie centrale 4 et s'étend depuis l'extrémité 8 jusqu'au coin correspondant du périmètre du châssis en une extrémité libre 9 qui est espacée d'une distance H par rapport à la surface de fixation 7. Les quatre extrémités libres 9 des quatre parties inclinées 6 des deux montants 1, 2 du châssis définissent les quatre coins du périmètre sensiblement rectangulaire ou carré.

Comme on peut le voir sur les figures 2 et 3, les parties inclinées 6 sont relevées au niveau de leurs extrémités libres 9, et il est prévu au niveau de chacune de ces extrémités libres 9 un moyen 10 pour fixer un coin correspondant 11 d'un couvercle 12.

La forme inclinée, c'est-à-dire relevée vers le haut, des parties inclinées 6 permet de libérer pratiquement tout l'espace d'une zone latérale 13 située entre deux extrémités libres 9 de deux pièces inclinées 6 appartenant aux deux montants distincts 1, 2. Il résulte de cela que des câbles peuvent parvenir latéralement dans la zone latérale 13 du châssis en n'importe quel endroit de cette zone latérale 13. En particulier, il est possible de faire parvenir un câble 14 dans la zone latérale 13 au niveau du montant 1 lui-même, parce que ce câble peut passer par dessus ou par dessous la partie inclinée 6. Il est par conséquent possible de disposer une goulotte 15 servant à amener les câbles électriques et dont la largeur peut être sensiblement égale à la largeur du châssis, c'est-à-dire égale à la longueur de la zone latérale 13.

De préférence, chacune des extrémités 8 des parties centrales 4 des deux montants 1 est située à une première distance prédéterminée A par rapport au côté 13 du périmètre qui est perpendiculaire aux montants 1, 2. En outre, chacune des extrémités 8 des parties centrales 4 des deux montants 1, 2 peut être située à une seconde distance prédéterminée B par rapport au côté 16 du périmètre qui est parallèle aux montants correspondants 1, 2. Il est en outre possible que ladite première distance A soit sensiblement égale à ladite seconde distance B, afin que les quatre parties inclinées 6 soient situées sensiblement dans un plan diagonal P du périmètre 13, 16 du châssis.

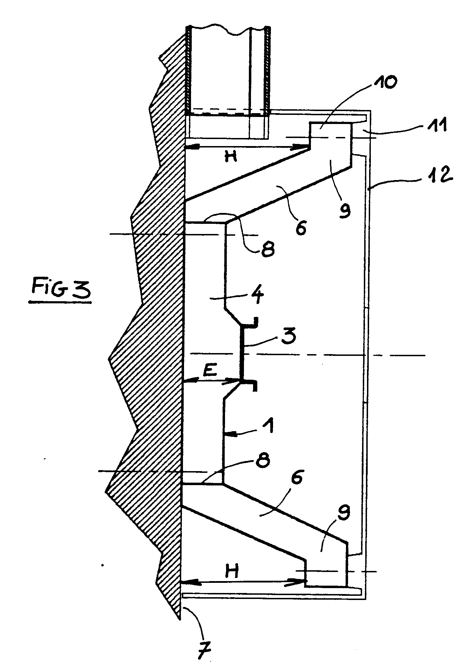

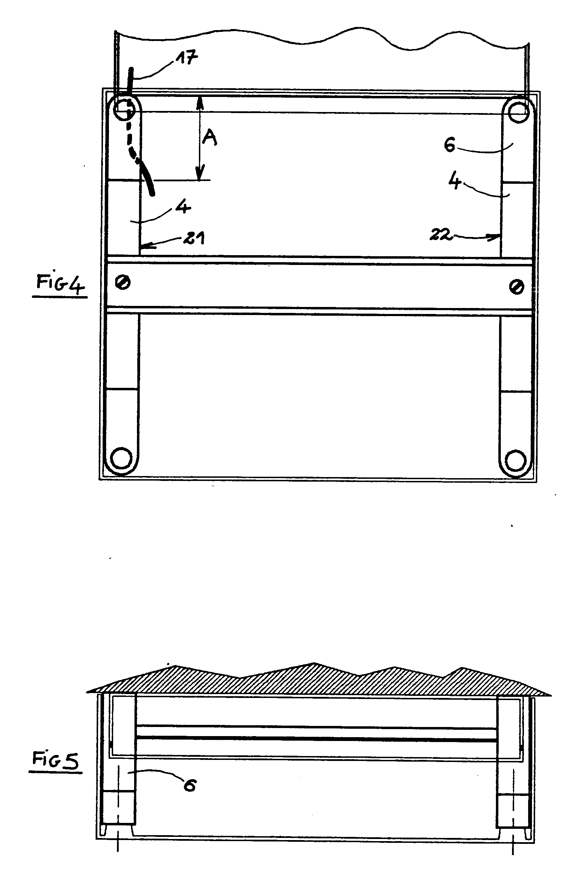

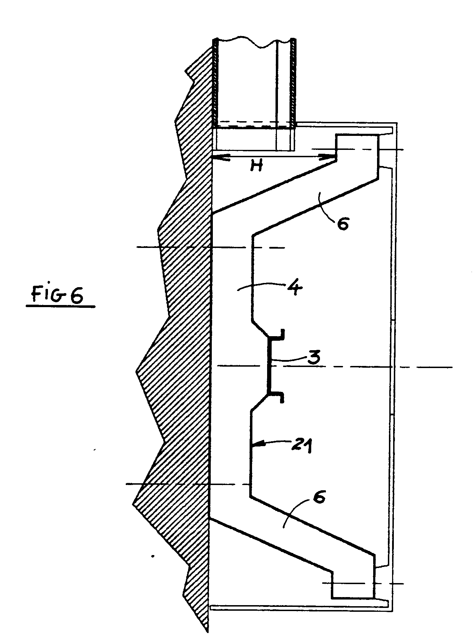

Sur les figures 4, 5 et 6, on distingue un autre mode de réalisation de l'invention. Dans ce mode de réalisation, la seule différence par rapport au premier mode de réalisation illustré par les figures 1 à 3 réside dans le fait que chacune des extrémités 8 des parties centrales 4 de deux montants 21, 22 est située à proximité immédiate du côté 16 du périmètre qui est parallèle au montant correspondant 21, 22 de sorte que ledit montant 21 s'étende sensiblement dans un plan perpendiculaire à la surface de fixation 7. En d'autres termes, si l'on regarde le châssis en vue de dessus, on voit que la partie centrale 4 du montant 21 et les deux parties inclinées 6 de ce même montant apparaîssent sensiblement alignées et sont accolées au côté 16 du périmètre du châssis. Dans ce cas, le rail 3 fait fixer au niveau de l'une et l'autre de ces deux extrémités sur la face supérieure des parties centrales 4 des deux montants 21, 22. Cette disposition permet encore de faire parvenir des câbles sur toute la largeur du côté 13 du châssis. On peut en particulier faire parvenir un câble 17 au niveau même de la partie inclinée 6 parce que ce câble peut passer dessous l'extrémité libre de la partie inclinée 6 qui est espacée de la surface de fixation 7 d'une distance H.

Il est possible de réaliser chaque montant 1, 2 ou 21, 22 en une seule pièce qui comporte une partie centrale 4 et deux parties inclinées 6.

L'association du châssis selon l'invention avec le couvercle 12 forme un coffret électrique.

## Revendications

1. Châssis d'appareillage électrique destiné à être fixé sur une surface de fixation plane (7), comprenant :
deux montants parallèles (1, 2 ; 21, 22) dont les quatre extrémités définissent les quatre coins d'un périmètre rectangulaire du châssis, et
au moins un rail de fixation (3) de l'appareillage électrique qui vient se fixer transversalement sur les deux montants (1, 2 ; 21, 22),
caractérisé en ce que chaque montant comprend :
une partie centrale (4) allongée rectiligne destinée à venir s'appliquer contre ladite surface de fixation (7) et dont chaque extrémité (8) est située à l'intérieur dudit périmètre du châssis, et
une partie inclinée (6) allongée qui est disposée au niveau de chacune des deux extrémités (8) de ladite partie centrale (4), qui s'étend depuis l'extrémité (8) correspondante de ladite partie centrale jusqu'au coin correspondant dudit périmètre du châssis, et dont l'extrémité libre (9) est espacée d'une distance déterminée (H) par rapport à ladite surface de fixation (7).

2. Châssis selon la revendication 1, caractérisé en ce que chacune des extrémités (8) des parties centrales (4) des deux montants (1, 2 ; 21, 22) est située à une première distance prédéterminée (A) par rapport au côté du périmètre qui est perpendiculaire au montant correspondant (1, 2 ; 21, 22).

3. Châssis selon l'une des revendications 1 ou 2, caractérisé en ce que chacune des extrémités (8) des parties centrales (4) des deux montants (1, 2) est située à une seconde distance prédéterminée (B) par rapport au côté du périmètre qui est parallèle au montant correpondant (1).

4. Châssis selon l'une des revendications 1 ou 2, caractérisé en ce que chacune des extrémités (8) des parties centrales (4) des deux montants (21, 22) est située à proximité immédiate du côté du périmètre qui est parallèle au montant correpondant (21), de sorte que ledit montant (21) s'étende sensiblement dans un plan perpendiculaire à la surface de fixation (7).

5. Châssis selon la revendication 3, caractérisé en ce que lesdites première (A) et seconde (B) distances sont sensiblement égales, de sorte que lesdites parties inclinées (6) sont situées sensiblement dans un plan diagonal (P) dudit périmètre du châssis.

6. Châssis selon l'une quelconque des revendications précédentes, caractérisé en ce que l'extrémité libre (9) de chaque partie inclinée (6) comporte un moyen (10) pour fixer sur cette extrémité libre un coin correspondant (11) d'un couvercle (12), l'ensemble monté formant un coffret électrique.

7. Châssis selon l'une quelconque des revendications précédentes, caractérisé en ce que la partie centrale (4) d'un montant (1, 2 ; 21, 22) et ses deux parties inclinées (6) forment une pièce monobloc obtenue par moulage.

## Patentansprüche

1. Schaltgeräte-Trägerrahmen zur Befestigung auf einer ebenen Befestigungsfläche (7), bestehend aus
zwei parallel angeordneten Tragschienen (1, 2; 21, 22), deren vier Enden die vier Eckpunkte einer rechteckigen Begrenzung des Trägerrahmens bilden, sowie
mindestens einer, quer auf den beiden Tragschienen (1, 2; 21, 22) befestigten Profilschiene (3) zur Montage von Schaltgeräten,
dadurch gekennzeichnet, daß jede Tragschiene
einen länglichen, geradlinigen Mittelabschnitt (4), der dazu dient, auf die genannte Befestigungsfläche (7) aufgelegt zu werden, und dessen sämtliche Enden (8) innerhalb der genannten Begrenzung des Trägerrahmens liegen, sowie
einen in Höhe jedes der beiden Enden (8) des genannten Mittelabschnitts (4) angeordneten länglichen, geneigten Abschnitt (6) umfaßt, der sich vom jeweiligen Ende (8) des genannten Mittelabschnitts bis zum entsprechenden Eckpunkt der genannten Begrenzung des Trägerrahmens erstreckt und dessen freies Ende (9) in einem bestimmten Abstand (H) über der genannten Befestigungsfläche (7) liegt.

2. Trägerrahmen nach Anspruch 1, dadurch gekennzeichnet, daß jedes der Enden (8) der Mittelabschnitte (4) der beiden Tragschienen (1, 2 ; 21, 22) in einem festgelegten ersten Abstand (A) zu derjenigen Seite der Begrenzung angeordnet ist, die rechtwinklig zur entsprechenden Tragschiene (1, 2; 21, 22) verläuft.

3. Trägerrahmen nach einem der Ansprüche 1 oder 2, dadurch gekennzeichnet, daß jedes der Enden (8) der Mittelabschnitte (4) der beiden Tragschienen (1, 2) in einem festgelegten zweiten Abstand (B) zu derjenigen Seite der Begrenzung angeordnet ist, die parallel zur entsprechenden Tragschiene (1) verläuft.

4. Trägerrahmen nach einem der Ansprüche 1 oder 2, dadurch gekennzeichnet, daß jedes der Enden (8) der Mittelabschnitte (4) der beiden Tragschienen (21, 22) in unmittelbarer Nähe derjenigen Seite der Begrenzung angeordnet ist, die parallel zur entsprechenden Tragschiene (21) verläuft, so daß sich die genannte Tragschiene (21) in einer rechtwinklig zur Befestigungsfläche (7) liegenden Ebene erstreckt.

5. Trägerrahmen nach Anspruch 3, dadurch gekennzeichnet, daß der genannte erste (A) und zweite (B) Abstand identisch sind, so daß die genannten geneigten Abschnitte (6) in einer diagonalen Ebene (P) der genannten Begrenzung des Trägerrahmens angeordnet sind.

6. Trägerrahmen nach irgendeinem der vorhergehenden Ansprüche, dadurch gekennzeichnet, daß das freie Ende (9) jedes geneigten Abschnitts (6) ein Mittel (10) zur Befestigung eines entsprechenden Eckpunkts (11) eines Deckels (12) auf diesem freien Ende aufweist, so daß die fertig montierte Anordnung einen Elektroinstallationskasten bildet.

7. Trägerrahmen nach irgendeinem der vorhergehenden Ansprüche, dadurch gekennzeichnet, daß der Mittelabschnitt (4) einer Tragschiene (1, 2; 21, 22) und ihre beiden geneigten Abschnitte (6) als gemeinsames Einzel-Formteil ausgebildet sind.

## Claims

1. An electrical switchgear frame designed to be fixed onto a flat fixing surface (7), comprising :
two parallel uprights (1, 2; 21, 22) the four ends of which define the four corners of a rectangular perimeter of the frame, and
at least one fixing rail (3) of the electrical switchgear which is fixed transversely onto the two uprights (1, 2; 21, 22),
characterized in that each upright comprises :
a straight elongated central part (4) designed to be applied against said fixing surface (7) and each end (8) of which is situated inside said perimeter of the frame, and
an inclined elongated part (6) which is located at the level of each of the two ends (8) of said central part (4), which extends from the corresponding end (8) of said central part up to the corresponding corner of said perimeter of the frame, and the free end (9) of which is separated from said fixing surface (7) by a set distance (H).

2. The frame according to claim 1, characterized in that each of the ends (8) of the central parts (4) of the two uprights (1, 2; 21, 22) is situated at a first preset distance (A) with respect to the side of the perimeter which is perpendicular to the corresponding upright (1, 2; 21, 22).

3. The frame according to one of the claims 1 or 2, characterized in that each of the ends (8) of the central parts (4) of the two uprights (1, 2) is situated at a second preset distance (B) with respect to the side of the perimeter which is parallel to the corresponding upright (1).

4. The frame according to one of the claims 1 or 2, characterized in that each of the ends (8) of the central parts (4) of the two uprights (21, 22) is situated immediately next to the side of the perimeter which is parallel to the corresponding upright (21), so that said upright (21) extends in a plane perpendicular to the fixing surface (7).

5. The frame according to claim 3, characterized in that said first (A) and second (B) distances are equal, so that said inclined parts (6) are situated in a diagonal plane (P) of said perimeter of the frame.

6. The frame according to any one of the foregoing claims, characterized in that the free end (9) of each inclined part (6) comprises a means (10) for fixing a corresponding corner (11) of a cover (12) onto this free end, the fitted assembly forming an electrical cabinet.

7. The frame according to any one of the foregoing claims, characterized in that the central part (4) of an upright (1, 2 ; 21, 22) and its two inclined parts (6) form a monobloc part obtained by moulding.
